# EUROPEAN PATENT APPLICATION

(11) **EP 0 890 872 A1**
(43) Date of publication of application: **13.01.1999**
(21) Application number: 98108096.3
(22) Date of filing: 04.05.1998
(51) Int. Cl.: G03B 27/52, G03B 27/58

(54) **An apparatus for making ornamental graphic patterns on photographic prints**

(30) Priority: 08.07.1997 IT MI971614
(71) Applicant: :L.P. Photo Color Professional E Finisher S.r.l., 28060 Cureggio, (Novara) (IT)
(72) Inventor: Langhi, Alfredo, 28060 Cureggio (Novara) (IT); Langhi, Luca, 28060 Cureggio (Novara) (IT)
(74) Representative: Sutto, Luca

(57) **Abstract**

It is disclosed an apparatus for making ornamental graphic patterns on photographic prints comprising movement means (2) for bringing to a printing station (3), a photographic-paper ribbon (4) to be exposed and a photographic film (5) successively reproducing the photograms to be transferred onto said ribbon (4); main lighting means (6) acting on the film (5) and the ribbon (4) to cause printing of the photograms on the ribbon (4); and a masking device (7), interposed between the main lighting means (6) and a print surface of the ribbon (4) intended for being exposed, for defining an ornamental frame at a border of each photographic print.

## Description

The present invention relates to an apparatus for making ornamental graphic patterns on photographic prints.

It is known that in order to automatically carry out development and printing of negatives at high production rates, apparatuses are currently employed that substantially comprise a drive system arranged to move a photographic-paper ribbon to be printed in a step-by-step movement. Also moved parallelly to and in synchronism with the movement of the photographic-paper ribbon is a film successively reproducing the different exposures to be printed on the photographic paper. At a printing station, both the film and the photographic paper are temporarily stopped so that a lighting system may project the image present on the film and consequently conveniently expose the photographic paper.

The above described apparatuses perform an automatic process of the analog type capable of carrying out printing of films of various sizes on papers and media of different nature adapted to be printed as a result of projection thereon of an image present on the film.

Due to the completely analog nature of the process, results that are qualitatively valuable are obtained at reduced costs and in a reduced period of time.

Beside these unquestionable positive aspects typical of traditional apparatuses however, there is an intrinsic limit given by the impossibility of associating ornamental graphic patterns with the photographic print so as to improve the aesthetic appearance of the photographic print or in any case personalize the print itself, depending on the taste of the public for whom said prints are intended.

For example, the presence of ornamental patterns or monochromatic ornamental frames disposed along the photographic print edges has proved to be aesthetically agreeable and particularly appreciated by consumers.

It is to note that presently, in order to make prints having ornamental frames or other graphic patterns, it is necessary either to reproduce the graphic pattern during a subsequent printing step by use of appropriate inks (which will involve slowed production rates and a doubtful quality of the product) or to make use of digital processing techniques; as a matter of fact, traditional processing apparatuses of the analog type are unable to make any sort of modification to the photograms present in the negative film.

With reference to the digital processing techniques, it is to note that, in order to introduce graphic patterns during the printing step, digital scanning systems can be used which acquire the image of the negative film and send it to a computer that, due to a graphic-processing software, enables any type of graphic pattern wished by the user to be inserted.

Next, the digitalized and processed graphic image is sent to a reproduction system that will be able to either directly carry out printing or make a series of films relating to the images to be printed in a subsequent step.

It is however apparent that, in order to obtain good results in terms of resolution and fidelity in the chromatic reproduction, the digital processing systems involve very complicated apparatuses that consequently are of high cost too. In addition, also important is the fact that digital processing systems have very reduced production rates. Finally, conventional photographic reproduction and printing machines of the analog type can be hardly adapted for including digital graphic processing systems too, and sometimes this is even impossible.

Under this situation, it is a fundamental object of the present invention to provide an apparatus for making ornamental graphic patterns on photographic prints capable of operating at reduced costs and at high production rates. It is also an important object of the invention to provide a new apparatus to be obtained with minimum structural modifications from a conventional photographic printing machine of the analog type, and at the same time capable of making high-quality products.

The foregoing and further objects that will become more apparent in the course of the present description, are substantially achieved by an apparatus for making ornamental graphic patterns on photographic prints in accordance with the features recited in the appended claims.

Further features and advantages will be best understood from the detailed description of a preferred, non-exclusive embodiment of an apparatus in accordance with the invention. This description will be taken hereinafter, by way of non-limiting example, with reference to the accompanying drawings, in which:

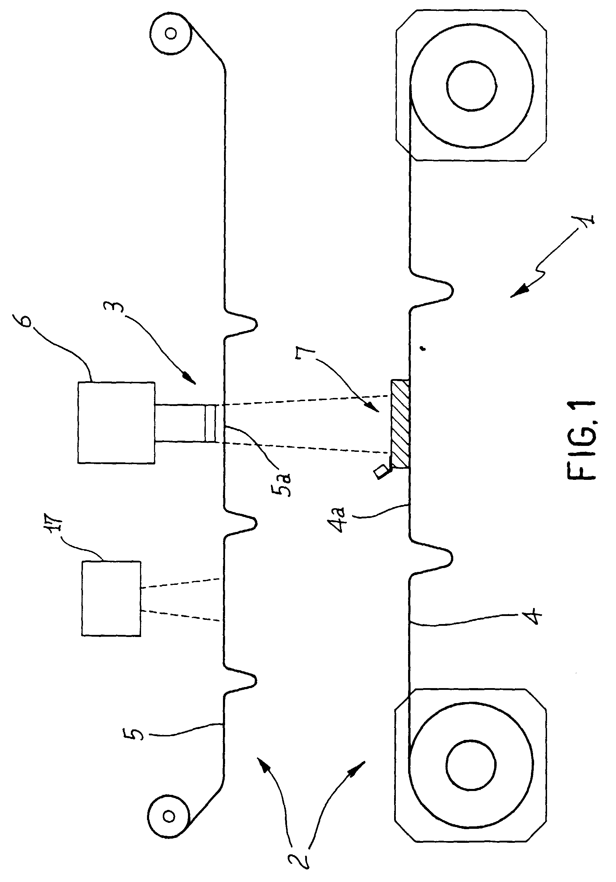

- Fig. 1 is a diagrammatic overall view relating to an apparatus in accordance with the invention;
- Fig. 2 is a bottom view of a masking frame to be used in the apparatus in accordance with the invention;
- Fig. 3 is a cross-sectional view taken along line III-III in Fig. 2;

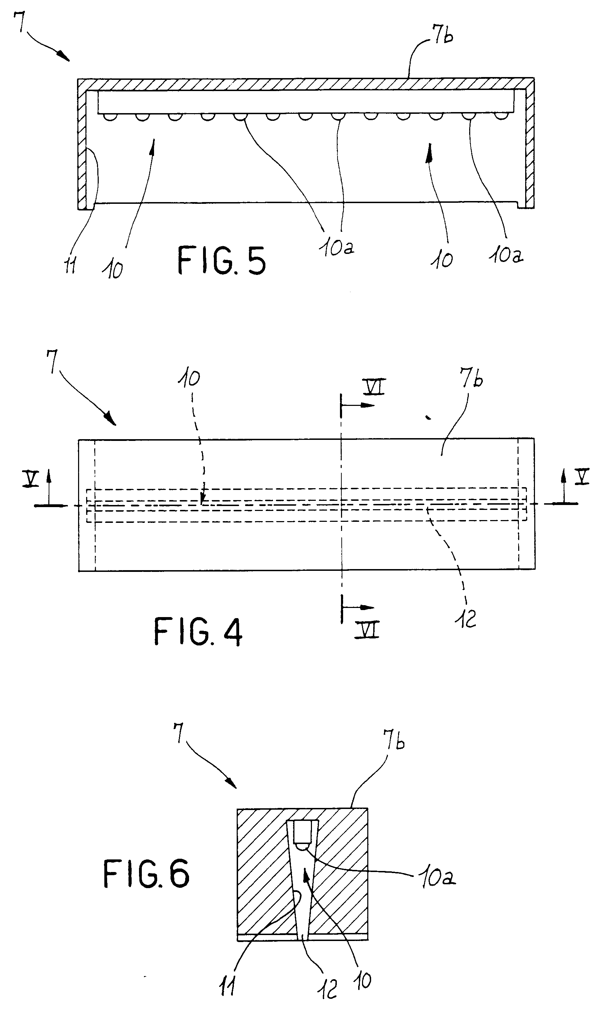

- Fig. 4 is a top plan view of a masking bar to be used in the apparatus in reference as an alternative solution to the masking frame shown in Fig. 2;
- Fig. 5 is a longitudinal sectional view taken along line V-V of the bar shown in Fig. 4;
- Fig. 6 is a cross-sectional view along line VI-VI of the bar shown in Fig. 4;
- Fig. 7 is a fragmentary plan view showing four bars of the same type as in Fig. 4 under use conditions;
- Fig. 8 is a view taken along line VIII-VIII in Fig. 7; and
- Fig. 9 is a wiring diagram of the control circuitry associated with the apparatus in reference.

With reference to the accompanying drawings, an apparatus for making ornamental graphic patterns on photographic prints in accordance with the present invention has been generally identified by reference numeral 1.

Apparatus 1 conventionally comprises movement means 2 arranged to respectively bring to a printing station 3, a photographic-paper ribbon 4 or other sheet material to be exposed and a photographic film 5 successively reproducing the photograms to be transferred onto said ribbon during the printing step.

In more detail, it is to note that the photographic-paper ribbon 4 and film 5 preferably move along parallel paths and according to a synchronized step-by-step movement so that each photogram may stay at the printing station 3 a sufficient time to enable main lighting means 6 operatively active on the film and the ribbon to cause exposure of the ribbon with each of the photograms reproduced on the film.

Practically, the main lighting means 6 active at the printing station illuminates the photogram 5a to be transferred onto the photographic-paper ribbon 4 by projecting a light beam towards the latter that will be therefore exposed and will reproduce the negative image of the photogram.

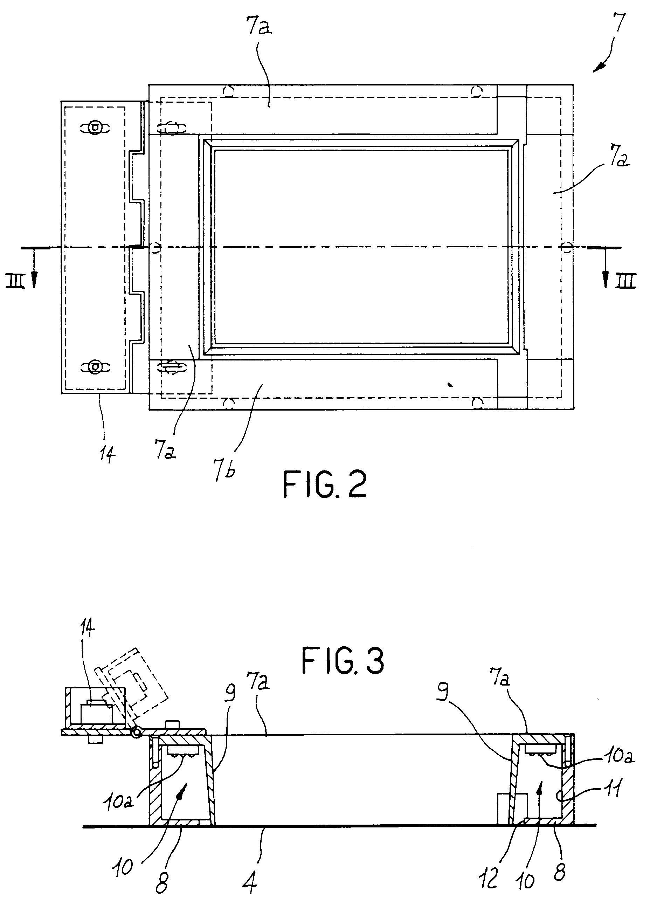

In an original manner, the apparatus in accordance with the invention comprises at least one masking device 7 interposed between the main lighting means 6 and a print surface 4a of the ribbon 4 intended for being exposed. In more detail, for each print to be carried out, the masking device is capable of interposition between a portion of the print surface 4a and the light beam from the main lighting means 6, so as to optically isolate a predetermined region 8 (see Fig. 3) of the print surface intended for defining an ornamental graphic pattern.

Preferably, the masking device 7 is substantially in the form of a frame so that the region 8 intended for defining ornamental graphic patterns on the ribbon to be exposed 4 is disposed at the perimetric edge of each photographic print for defining an ornamental frame which may be for example white or of any other tone.

Due to this frame-shaped conformation, the masking device 7 practically defines a central opening 9 where passage of light from the main lighting means 6 is allowed in order to cause exposure of the photogram on the photographic-paper ribbon; meanwhile, as already said, the masking device 7 inhibits light passage at the perimetric edge of the photographic print in order to directly define an ornamental frame during the printing step.

From a construction point of view it is to note that the masking device 7 may consist of a polygonal framework 7a, of a rectangular conformation for example, or the shape of which in any case matches that intended for the ornamental frame, or alternatively it may consist of a predetermined number of (for example rectilinear) bars 7b to be positioned on the ribbon 4 at the printing station 3 along the perimetric edge of each photographic print. In the latter case, if rectangular prints provided with ornamental frames at the edge region are wished to be for example obtained, four bars can be used that must be suitably disposed close to each other at the printing station so as to form the desired masking of ribbon 4.

It is to note that use of bars is advantageous in that varying sizes with a reduced set of bars can be obtained during the printing step.

In accordance with a further aspect of the invention, if ornamental frames of particular colours are wished to be obtained, auxiliary lighting means 10 may be provided in apparatus 1, which means is directly active on the ribbon to be exposed and arranged to at least partly illuminate the region 8 where ornamental graphic patterns, such as an ornamental frame for example, are to be defined. Preferably the auxiliary lighting means 10 is arranged within a seating 11 formed in the masking device 7 and optically isolated from the main lighting means 6. Practically, as shown in the accompanying drawings, the auxiliary lighting means 10, by operating internally of seating 11 formed in the masking device, will be able to send a light beam towards the ribbon to be exposed 4 exclusively through a slit 12 intended for, under operating condition, being directly turned towards the ribbon to be exposed. Depending on the sizes and position of the slit, an ornamental frame of varying width and position can be obtained so as to meet any aesthetic requirements.

Preferably, the auxiliary lighting means 10 comprises a predetermined number of light emitters 10a, LEDs or laser emitters for example, or still other types, which are homogeneously distributed along the seating 11 and capable of emitting light beams of such a wavelength that the most varied chromatic aspects can be determined on the ribbon to be exposed, to such an extent that practically both a monochromatic frame of any colour and, if wished, a polychromatic frame, of two, three or more colours for example, may be accomplished.

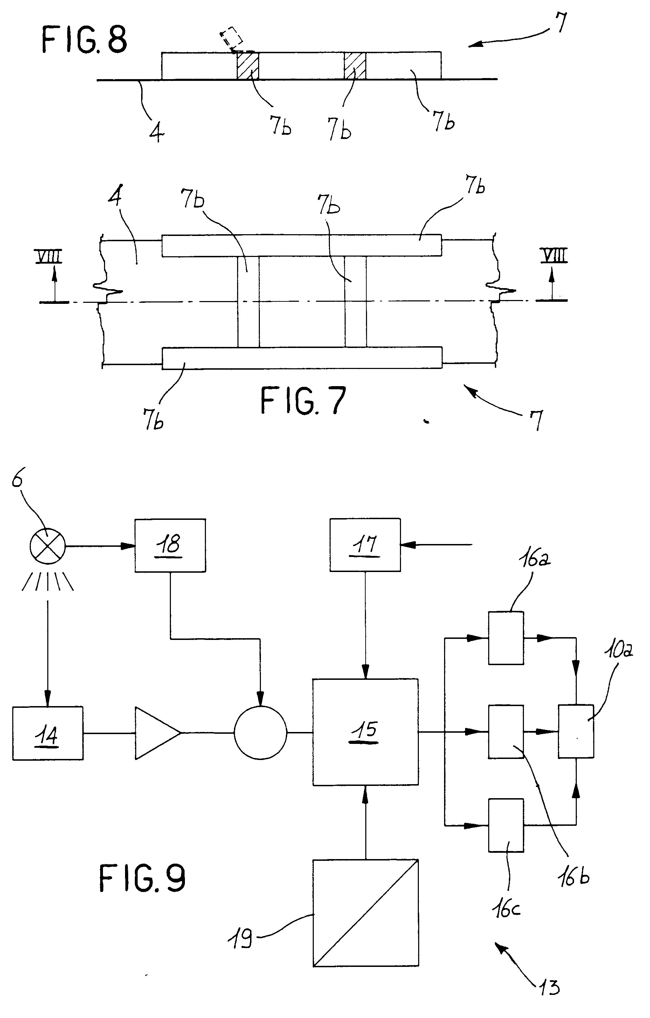

Apparatus 1 is also advantageously provided with a control circuitry 13 (Fig. 9) capable of suitably managing the light emitters 10a. This circuitry comprises at least one sensor unit 14, preferably associated with the masking device 7, arranged to detect the light emitted from the main lighting means 6 and generate a corresponding output control signal for a control unit or central processing unit (CPU) 15 interposed between the sensor unit 14 itself and the light emitters 10a. It is to note that the sensor unit 14 can be of an angularly adjustable type, oscillatably linked to the masking device 7 for example. The control unit 15, upon reception of the control signal from the sensor unit 14 is arranged to cause the light emitters 10 to be switched on over a predetermined time interval and according to predetermined intensities of light emission.

Alternatively, the CPU may be provided for activating emitters 10 without the sensor unit 14 being required, by directly talking to the printing station 3 that, after intervention of the main lighting means 6 has been completed, sends an appropriate signal to the CPU for operation of emitters 10.

In order to obtain the most varied chromatic effects, first, second and third series of light emitters are normally provided; they are intended for emitting the light of first, second and third colours, respectively.

It is to note that from a construction point of view the emitters of the first, second and third series are provided to operate by emitting red, yellow and blue lights respectively, which lights suitably combined with each other can give rise to any chromatic effect.

It is apparent that from a construction point of view light emitters may be used that are capable of independently generating a light of the desired tone without the use of three different light emitters being required.

In any case, in order to control the light emitters of each series, the control unit or CPU 15 will act on one or more interfaces 16a, 16b, 16c interposed between the CPU and the light emitters 10a. The interfaces receive a digital input signal from the CPU which is proportional to the light intensity according to which emitters in each chromatic range must operate and generate a corresponding analog output supply signal to the respective series of light emitters.

Finally, the apparatus in accordance with the invention can also be provided with an image scanning device 17 active on the film 5 for detecting each photogram present on the film itself and carrying out digital conversion of same.

Once suitably digitalized, the scanning device will send the different photograms to the CPU 15 which will be able to determine the major colour or colours in each image, based on calculation algorithms integrated thereinto or of which the CPU itself will be able to make use.

Once the major colour relating to each photogram has been determined, the CPU will be able to correspondingly operate the interfaces 16a, 16b, 16c acting on the light emitters so as to define a correct power supply to be sent to the latter so that, depending on the user's choices, an ornamental frame having a colour corresponding to the major colour obtained in digitalizing the corresponding photogram or a colour in contrast therewith may be obtained.

As an alternative solution to the scanning device 17, a circuitry 18 may be provided for optically detecting the major colour of each photogram; said circuitry will be able to communicate with the CPU after interposition of an analog-to-digital converter. It is further to note that the control circuitry 13 can also comprise a manual/automatic selection system 19 capable of enabling the CPU both to directly receive settings from the user (manual operation) and to operate on the basis of previously entered menus (automatic operation).

Operation of the apparatus in reference described above mainly as regards structure is as follows.

Once the photographic-paper ribbon to be exposed 4 and the film/films 5 have been conveniently positioned on apparatus 1, the movement means 2 moves both the photographic-paper ribbon and the film successively containing the photograms to be transferred to the ribbon itself, along respective operating paths. In particular, the film 5 and the photographic-paper ribbon 4 are suitably moved until they reach the printing station 3 in which the film and photographic-paper ribbon are substantially parallel to each other. It is to note that movement both of the photographic-paper ribbon and the film is of the step-by-step type, so that they can be stopped for predetermined periods of time (in the order of some ten milliseconds, for example) at the printing station 3 to enable the main lighting means 6 to act on the film, that is the photogram present each time in the printing station, by projecting it and causing printing of same on the photographic-paper ribbon that, in this manner, will be able to receive the succession of photograms present on the film.

Due to the masking device 7 operating at the printing station 3 the light beam from the main lighting means 6 will exclusively illuminate a central portion of each print that is to be obtained on the photographic-paper ribbon 4. Practically, the masking body will define an ornamental frame optically isolated from the main lighting means 6, which frame is not subjected to photographic printing, thereby creating a white perimetric border for each photographic print. It is apparent that, depending on the particular conformation of the masking body, an ornamental frame of any size and shape can be obtained.

Still during the printing step of each photogram, the auxiliary lighting means 10 may be also operated and it can send a light beam of appropriate tone to each print subjected to masking, exactly at the ornamental frame thereof. In this manner many chromatic effects can be obtained.

For example, an ornamental frame of the desired colour or a frame formed of several concentric bands of different tones optionally combined with a white band can be obtained. It should be noted that the auxiliary lighting means 10 is activated during each print following detection of light by the sensor member 14 from the main lighting means 6. In this way, accomplishment and optionally colouring of the ornamental frame will take place at the same moment that the central portion of the print is subjected to normal exposure for reproduction of the photogram, without on the other hand any loss of time in terms of production rates.

From the point of view of operation it is also important to note that the control unit 14 can operate either upon a manual command, executing ornamental frames of a predetermined colour to be set by the user, or following a previously entered menu so as to carry out printing of frames of predetermined colours (a selecting block 19 active on the CPU 15 is provided for the purpose), or finally it will be able to operate the light emitters 10 depending on the major colour present in each photogram to make an ornamental frame having a colour in accord or in contrast with the major colour present in the photogram being printed, thereby meeting any type of requirement.

In this case, during printing of each photogram the CPU 15 adjusting and controlling the light emitters will also receive data relating to each photogram in a digitalized form from a scanning station 17 located upstream of the printing station 3 and active on the negatives.

Therefore the CPU 15 will be able, based on the digital data from the scanning station, to calculate the major colour of each photogram and correspondingly associate the most appropriate frame therewith during the printing step.

The invention achieves important advantages.

It is to be pointed out in fact that due to the apparatus in accordance with the invention photographic prints provided with ornamental frames having shapes, sizes and colours of any kind and nature can be made without involving reductions in terms of production rates relative to conventional processing apparatuses of an analog type.

It is also to note that, advantageously, apparatus 1 can be obtained from conventional analog processing apparatuses, with simple and cheap modifications.

In other words, by introducing simple modifications the apparatuses currently on the market can be made easily appropriate for executing prints both with ornamental frames, if the user has expressly required the presence of them, and without ornamental frames.

It is also to note that the apparatus in reference is very flexible from an operating point of view as practically it can make ornamental frames of any colours and tones without requiring complicated digital processing and conversion operations that would involve high costs and quite slowed production rates.

It is also important to point out that by using a masking body consisting of suitably sized bars, ornamental frames for different print sizes can be made with a limited number of bars, which obviously greatly reduces costs for the apparatus setting up.

Also worthy of note is the fact that the presence of a CPU has been provided, which is capable of carrying out control of the light emitters depending either on previously set and entered menus, or on manual commands, or also on output data from one of a plurality of scanning stations in order to make ornamental frames of colours in accord or in contrast with the colours present in the photogram to be printed. It is to note that use of scanning stations and calculation algorithms of the major colour of an image surely make the base structure of the apparatus heavier; however this does not give rise to particular problems in terms of production rates because the operation takes place in a completely automatic manner and because there are presently on the market efficient algorithms capable of calculating the major colour in a digitalized image in relatively short periods of time, said digitalized image being the only information required by the CPU for determining the colour to be used for the ornamental frame.

In conclusion, therefore, the apparatus in reference achieves all the intended aims with a simple, efficient and reliable structure.

## Claims

1. An apparatus for making ornamental graphic patterns on photographic prints, comprising:
- movement means (2) for bringing to a printing station (3), a photographic-paper ribbon or other sheet material (4) to be exposed and a photographic film (5) successively reproducing the photograms to be trasferred onto said ribbon (4);
- main lighting means (6) operatively acting on said film (5) and said ribbon (4) at the printing station (3) for determining printing of the photograms on the ribbon itself, characterized in that it comprises at least one masking device (7), interposed between the main lighting means (6) and a print surface of the ribbon (4) designed for being exposed, in order to prevent the main lighting means (6) from illuminating at least one predetermined region (8) of the print surface intended for defining ornamental graphic patterns.

2. An apparatus as claimed in claim 1, characterized in that the masking device (7) operates at the printing station (3).

3. An apparatus as claimed in claim 2, characterized in that said masking device (7) is substantially in the form of a frame in order to define said predetermined region (8) at a perimetric border of each photographic print, said masking frame at the same time delimiting a central opening (9) for passage of the light from the main lighting means (6) designed for exposing the photographic-paper ribbon (4).

4. An apparatus as claimed in claim 2, characterized in that the masking device (7) comprises a polygonal framework (7a) or, alternatively, a predetermined number of bars (7b) to be positioned at the printing station (3) along the perimetric edge of each photographic print.

5. An apparatus as claimed in claim 1, characterized in that it comprises auxiliary lighting means (10) directly acting on said ribbon (4) and arranged to illuminate said predetermined region (8) intended for defining ornamental graphic patterns, at least partly.

6. An apparatus as claimed in claim 5, characterized in that said masking device (7) comprises a seating (11) for housing said auxiliary lighting means (10), said seating (11) being optically isolated from the main lighting means (6) and communicating with the outside exclusively through a perimetric slit (12) which, under operating conditions, is intended for being directly turned towards the ribbon (4) to be exposed, said auxiliary lighting means illuminating the region intended for defining ornamental patterns through the perimetric slit (12), at least partly.

7. An apparatus as claimed in claim 5, characterized in that said auxiliary lighting means (10) comprises a predetermined number of light emitters (10a) homogeneously distributed along said seating (11).

8. An apparatus as claimed in claim 7, characterized in that it has a control circuitry (13) for said light emitters (10a) comprising:
- at least one sensor unit (14) arranged to detect the light emitted from said main lighting means (6) and correspondingly generate a predetermined control signal;
- a control unit (15) or central processing unit (CPU) operatively interposed between said sensor unit (14) and light emitters (10a) and arranged, upon reception of said control signal, to cause switching on of said light emitters (10a) over a predetermined period of time and according to predetermined intensities of light emission.

9. An apparatus as claimed in claim 8, characterized in that said light emitters (10a) comprise at least one first, one second and one third series of light emitters (10a) intended for emitting first, second and third colours, respectively.

10. An apparatus as claimed in claim 9, characterized in that said control unit (15) is active on said first, second and third series of light emitters (10a), upon interposition of respective control interfaces (16a, 16b, 16c) for causing respective intensities of light emission by each series of light emitters (10a).

11. An apparatus as claimed in claim 8, characterized in that it comprises an image-scanning device (17) acting on said film for acquisition and digital conversion of each photogram (5a) present on the film itself, said scanning device sending the photograms in a digitalized form to the CPU to establish the major colour in each photogram (5a), said CPU being able to operate said interfaces (16a, 16b, 16c) in order to cause, at said predetermined region (8), printing of a colour in accord or in contrast with said major colour.
